# EUROPEAN PATENT APPLICATION

(11) **EP 1 839 918 A1**
(43) Date of publication of application: **03.10.2007**
(21) Application number: 06425187.9
(22) Date of filing: 21.03.2006
(51) Int. Cl.: B60F 3/00

(54) **Amphibious vehicle**

(71) Applicant: A.R.I.S. S.p.A., 10040 Lombardore, Turin (IT)
(72) Inventor: Bellezza Quater, Giorgio, 10040 Lombardore (TO) (IT); Bellezza Quater, Paolo, 10077 San Maurizio Canavese (TO) (IT); Bellezza Quater, Silvia, 10077 San Maurizio Canavese (TO) (IT)
(74) Representative: Spandonari, Carlo

(57) **Abstract**

The vehicle comprises a main bodywork (12) supported on four wheels, provided with an engine, and shaped as a four-sided tubular body having side walls (18, 20), a roof (22) and a bottom wall (24) consisting of a double sheet (74, 76) with interposed cavity. A tubular bodywork extension (38) may be anchored to the rear part of the main bodywork, which also has side walls (42, 44), a roof (46), and a bottom wall (48) consisting of a double sheet (740, 760) with interposed cavity. A layer of lagging material, a layer of deadening material, or plates of ballistic steel may be housed within the cavities. A nose-shaped front fairing (64) or a watercut-shaped, forward flotation member (69) can be anchored to the forepart of the main bodywork (12).

## Description

The present invention relates to an amphibious vehicle typically for missions of civil defence, such as rescue operations and general emergency interventions in case of floods, inundations, and the like.

It is a main object of the present invention to provide an amphibious vehicle which can be easily and reversibly adapted in a very flexible way for carrying out different types of missions having specific requirements, e.g., in relation to its carrying capacity, to the way of use (through water, on land), and to its protection from the external environment.

The above object and other advantages, which will better appear below, are achieved by the amphibious vehicle having the features recited in claim 1, while the other claims state other advantageous, thought secondary, features of the invention.

The invention will be now described in more detail with reference to a few preferred, non-exclusive embodiments, shown by way of non limiting example in the attached drawings, wherein:

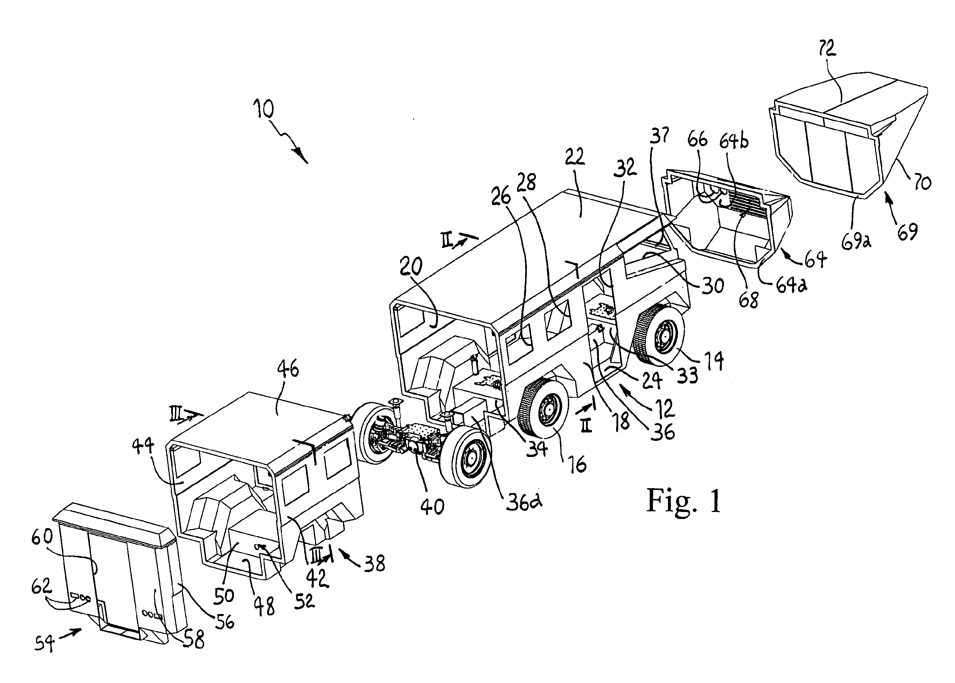

Fig. 1 is an exploded, perspective view of the amphibious vehicle according to this invention;
Fig. 2 is a cross-section of Fig. 1 made along line II-II;
Fig. 3 is a cross-section of Fig. 1 made along line III-III;
Fig. 4 is a perspective view of the amphibious vehicle of Fig. 1 in a first operative configuration;
Fig. 5 is a perspective view of the amphibious vehicle of Fig. 1 in a second operative configuration;
Fig. 6 is a perspective view of the amphibious vehicle of Fig. 1 in a third operative configuration;
Fig. 7 is a perspective view showing a separate element of the amphibious vehicle of Fig. 1, according to an alternative embodiment of the invention.

With reference to the above Figures, an amphibious vehicle 10 has a main bodywork 12 supported on four wheels such as 14, 16, and a plurality of accessory modules (separately described below) which can be alternatively or simultaneously connected to main bodywork 12 to allow the vehicle to assume different desired configurations.

Only the bodywork of the vehicle, which forms the main object of the invention, is shown in the Figures, while the other components, i.e., the engine, the equipment of the interior compartment, etc., which are irrilevant to the scope of the invention, are omitted for better clarity of illustration.

Main bodywork 12 consists of a four-sided tubular body which is open at its opposite ends and has two equal side walls 18, 20, a flat roof 22 and a bottom wall 24. Side walls 18, 20 each have two side-by-side, rear openings 26, 28 and a front opening 30 for respective windows, as well as a intermediate opening 32 for a door. Bottom wall 24 is shaped to receive the front axle-shaft/differential unit and the rear axle-shaft/differential unit (not shown) within respective housings 33, 34 rising inside the vehicle and interconnected via a channel 36 which axially extends along bottom wall 24. The cannel terminates with a channel extension 36a protruding beyond rear recess 34 and open to the rear, open end of bodywork 12. A transmission shaft is receivable within channel 36 for the interconnection of the two axle-shaft/differential units of main bodywork 12. The front, open end of the vehicle is splitted in two horizontal areas by a crosspiece 37. The area above crosspiece 37 is suited to receive a windshield.

Amphibious vehicle 10 comprises a bodywork extension 38 provided with a respective axle-shaft/differential unit 40 and consisting of a four-sided, tubular section having a profile corresponding to main bodywork 12 to be bolted to the rear end of main bodywork 12. Therefore, similarly to main bodywork 12, bodywork extension 38 has two windowed side walls 42, 44, a flat roof 46 and a bottom wall 48 shaped to receive axle-shaft/differential unit 40 in a housing 50. Housing 50 has transverse walls bored with holes 52, 53 in which respective transmission shafts (not shown) are inserted for operatively connecting axle-shaft/differential unit 40 to the rear axle-shaft/differential unit of main bodywork 12 and to the axle-shaft/differential unit of another possible bodywork extension (not shown) fixed to the rear end of bodywork extension 38.

Amphibious vehicle 10 is provided with a cover 54 surrounded by a peripheral edge 56 having a profile corresponding to the profile of main bodywork 12 and of bodywork extension 38 in order to be bolted to the open, rear end of one of them, depending on the desired configuration, as will be described in more detail below. The main surface 58 of cover 54 has an opening 60 for a door and a series of holes such as 62 for the rear lights.

Vehicle 10 is also provided with a tapered, front fairing or nose 64 to be bolted to the open, front end of the vehicle in the area below crosspiece 37. Front fairing 64 has an open anchor base 64a having a profile corresponding to the area below crosspiece 37, as well as a flat, front surface 64b having a series of holes 66 for the headlights and an engine-ventilating grille 68.

Vehicle 10 is also provided with a forward flotation module 69 to be bolted to the open, front end of the vehicle in the area below crosspiece 37 in place of front fairing 64. Similarly to front fairing 64, forward flotation member 69 has an anchor base 69a having a profile corresponding to the area below crosspiece 37. Forward flotation member 69 has a watercut-shaped bottom wall 70 closed by a foredeck 72.

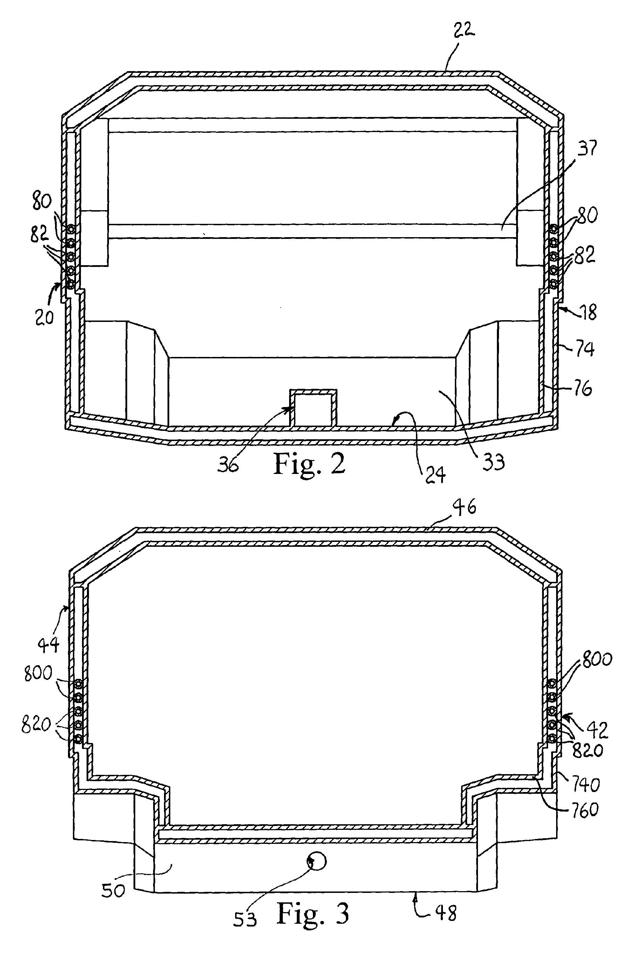

As shown in detail in Figs. 2, 3, where the thicknesses of the various parts have been accentuated for better clarity of illustration, the side walls, the bottom wall and the roof of main bodywork 12 and of bodywork extension 38 consist of a pair of spaced sheets 74, 76 and 740, 760 respectively, with an interposed cavity for receiving a layer of lagging material or deadening material, or plates of ballistic steel (not shown). Pipes such as 80, 800 for the hydraulic connection with the adjacent modules, e.g., for applying the brakes, for the ancillary equipment, and for supplying possible means for propelling the vehicle through water (as will be better described below), are also housed within the cavity between the sheets, as well as raceways such as 82, 820 for wires.

Amphibious vehicle 10 may be configured in different ways by virtue of its modular construction.

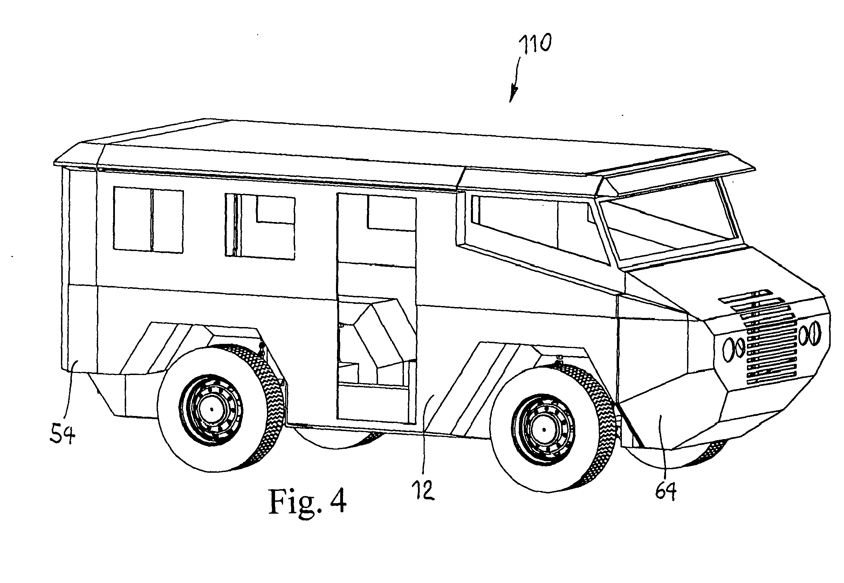

A basic configuration of amphibious vehicle 110 is shown in the example of Fig. 4, which includes main bodywork 12, cover 54 and front fairing 64. Amphibious vehicle 110 will be capable of passing through marshlands and limited sheets of water, with contact with the river-bed below.

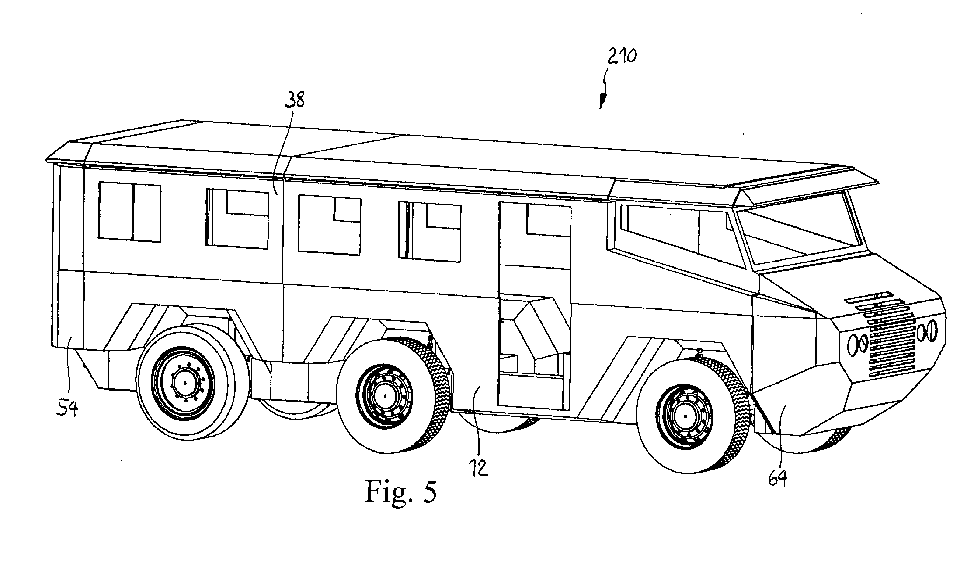

In the example of Fig. 5, bodywork extension 38 closed by cover 54, as well as front fairing 64 are coupled to main bodywork 12 to form an amphibious vehicle 210 having a higher carrying capacity with respect to the vehicle of Fig. 4.

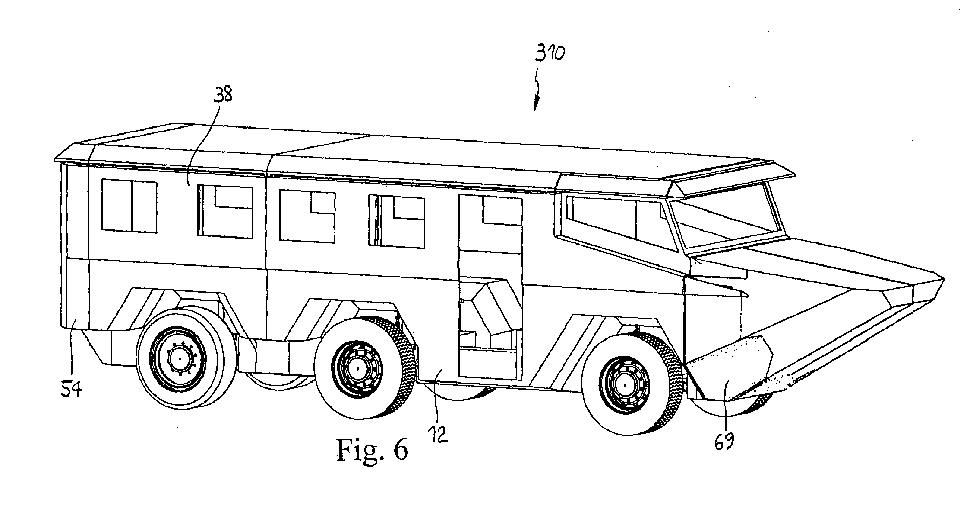

In the example of Fig. 6, bodywork extension 38 closed by cover 54, as well as forward flotation module 69 are coupled to main bodywork 12 to form an amphibious vehicle 310 which, with respect to the previous examples, is also capable of floating in deep waters.

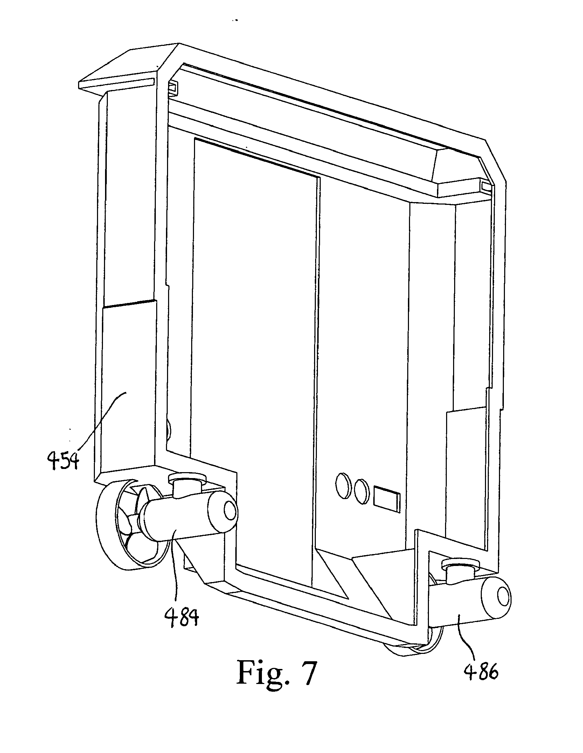

According to an alternative embodiment of the invention shown in Fig. 7, a pair of propellers 484, 486 driven by hydraulic motors supplied via pipes 80 are attached to the bottom of cover 454 for propelling the vehicle through the water.

A few preferred embodiments of the invention have been described herein, but of course many changes may be made by a person skilled in the art, within the scope of the inventive concept. For example, different configurations are possible for the vehicle, e.g., a plurality of modules equal to bodywork extension 38 may be bolted to the rear end of main bodywork 12.

## Claims

1. An amphibious vehicle, comprising a main bodywork (12) supported on four wheels and provided with an engine for said wheels, **characterized in that** said main bodywork is a four-sided tubular body having side walls (18, 20) and a bottom wall (24) consisting of a double sheet (74, 76) with interposed cavity.

2. The amphibious vehicle of claim 1, **characterized in that** said four-sided tubular body has a roof (22) consisting of a double sheet (74, 76) with interposed cavity.

3. The amphibious vehicle of claim 1 or 2, **characterized in that** said main bodywork (12) has an open, rear end to which a four-sided tubular section (38) is bolted having a profile corresponding to the main bodywork and provided with two side walls (42, 44), a roof (46), a bottom wall (48), and a cover (54) bolted to the rear end of said tubular section (38).

4. The amphibious vehicle of claim 3, **characterized in that** the side walls (42, 44), and the bottom wall (48) of said four-sided tubular section (38) consist of a double sheet (740, 760) with interposed cavity.

5. The amphibious vehicle of claim 4, **characterized in that** said four-sided tubular section (38) has a roof (46) consisting of a double sheet with interposed cavity.

6. The amphibious vehicle of any of claims 1 to 5, **characterized in that** a nose-shaped front fairing (64) is bolted to the forepart of the main bodywork (12).

7. The amphibious vehicle of any of claims 1 to 6, **characterized in that** a watercut-shaped, forward flotation member (69) is bolted to the forepart of the main bodywork (12) and has a bottom wall (70) closed by a foredeck (72).

8. The amphibious vehicle of any of claims 4 to 6, **characterized in that** interconnectable, hydraulic pipes (80, 800) are housed within said cavities.

9. The amphibious vehicle of any of claims 3 to 8, **characterized in that** said cover (454) is provided with means for propelling the vehicle through water (484, 486).

10. The amphibious vehicle of claim 9, **characterized in that** said means for propelling the vehicle through water comprise propellers (484, 486) driven by hydraulic motors connectable to said hydraulic pipes (80, 800).

11. The amphibious vehicle of any of claims 1 to 10, **characterized in that** a layer of lagging material is received within said cavities.

12. The amphibious vehicle of any of claims 1 to 10, **characterized in that** a layer of deadening material is received within said cavities.

13. The amphibious vehicle of any of claims 1 to 10, **characterized in that** plates of ballistic steel are received within said cavities.
